# EUROPEAN PATENT SPECIFICATION

(11) **EP 2 081 335 B1**
(45) Date of publication and mention of the grant of the patent: **29.02.2012**
(21) Application number: 09000605.7
(22) Date of filing: 16.01.2009
(51) Int. Cl.: H04L 12/56, G06F 15/16

(54) **Packet forwarding device and packet forwarding method**
Paketweiterleitungsvorrichtung und Paketweiterleitungsverfahren
Dispositif de transfert de paquets et procédé de transfert de paquets

(30) Priority: 17.01.2008 JP 2008008254
(43) Date of publication of application: 22.07.2009
(73) Proprietor: NEC Corporation, Minato-ku Tokyo 108-8001 (JP)
(72) Inventor: Philavong, Minaxay, Minato-ku, Tokyo 108-8001 (JP)
(74) Representative: Glawe, Delfs, Moll

(56) References cited:
- US-A1- 2003 037 163
- US-A1- 2004 165 604
- US-B1- 6 658 001

## Description

### REFERENCE TO RELATED APPLICATION

### TECHNICAL FIELD

This invention relates to a packet forwarding device and forwarding method, and in particular, to a packet forwarding device and forwarding method that maintains a packet sequence before and after forwarding.

### BACKGROUND

A router which performs forwarding of packets has an object of forwarding packets to a correct destination. However, in recent years, packets processed by the router include not only text and still image data, but also a lot of streaming data such as speech, video images and the like, which are of necessity realtime. The router must process and forward packets of streaming data in arrival sequence. This is because, in cases in which the packet sequence is reversed, packet losses occur and reproduction errors are generated, in streaming where realtime is required.

A flow router, provided with a packet forwarding device based on an architecture in which a forwarding unit and a control unit are separated, processes respective arriving packets according to individual packet processing time and individual processing route. Therefore, in this processing, reversal of packet sequence (that is, packet overtaking) may occur.

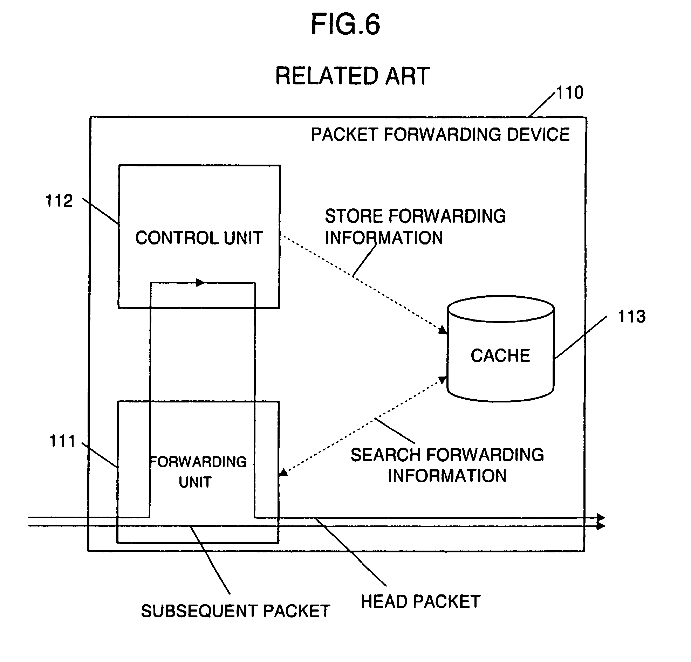

Fig. 6 is a block diagram for illustrating general operation and a problem of a conventional packet forwarding device based on the architecture in which the forwarding unit and the control unit are separated. In Fig. 6, the packet forwarding device 110 inside a router is provided with the forwarding unit 111, the control unit 112, and a cache 113.

In order to determine a forwarding destination of a (head) packet that arrives first, the control unit 112 refers to a destination IP address of a packet header, computes a next hop and an output interface of the forwarding destination of the packet, and forwards the packet. At this time, the control unit 112 requires a long search time in order to make reference to and perform a search of forwarding information stored in a main memory (not illustrated in the drawing). Furthermore, the control unit 112 registers the computed next hop and output interface, as forwarding information, in a forwarding table of the cache 113.

The cache 113 is a high speed memory for recording, and temporarily stores (holds) registered forwarding information.

The forwarding unit 111 makes reference to the destination IP address of the packet header of the arriving packet, makes reference to the forwarding table stored in the cache 113, and in cases in which desired forwarding information is stored, determines a forwarding destination in a short time and at high speed, and forwards the packet.

By not computing forwarding information of forwarding destinations of all packets, but by using forwarding information stored in the cache 113, the forwarding unit 111 can judge the forwarding destination of the packet in a short time, and can forward the packet at high speed.

Patent Document 1 discloses a network relay device in which packet forwarding performance is improved, and packet forwarding load inside the device is reduced.

### [Patent Document 1]

JP Patent Kokai Publication No. JP-P2001-094568A

### SUMMARY

The entire disclosure of Patent Document 1 is incorporated herein by reference thereto.

Another path setting method in a connection oriented network is disclosed in US-Bl-6 658 001, including the steps of resolving address information to set a short cut path between a transmitting source device and a destination device by use of a signalling message of a signalling protocol. This path setting method is realized by simply modifying the software of the communication unit such as the edge device, the router and the server.
The following analysis is given by the inventor of the present invention. As shown in Fig. 6, in a packet forwarding device 110 in which a forwarding unit 111 and a control unit 112 are separated, the following types of problems occur when a packet is forwarded to a next hop and output interface of a destination.

When a first (head) packet whose forwarding information is not yet registered in a cache 113 arrives at the forwarding unit 111, the forwarding unit 111 refers to the forwarding table stored in the cache 113, based on a destination IP address of the packet header. However, since this is the first packet, and the forwarding information (next hop and output interface) is not yet registered in the cache 113, the forwarding unit 111 forwards the packet to the control unit 112. The control unit 112 uses the destination IP address of the packet header, computes the next hop and output interface of the forwarding destination of the packet, and forwards the packet. The control unit 112 registers the computed forwarding information in the forwarding table of the cache 113.

After the forwarding information has been registered in the cache 113, with regard to packets included in the same flow, the forwarding unit 111 can determine the forwarding destination by making reference to the forwarding table of the cache 113, and can perform forwarding processing.

At this time, there is a difference in processing route and processing time between the head packet for which the control unit 112 requires a long time to search for (compute) the forwarding destination and perform forwarding, and a subsequent packet forwarded in a short time, based on the forwarding information registered in the cache 113, by the forwarding unit 111. Therefore, there is a problem in that, among these packets, packet sequence before and after forwarding is reversed. In addition, a similar problem occurs in the network relay device disclosed in Patent Document 1.

Consequently, provision of a packet forwarding device that maintains packet sequence before and after packet forwarding and of a method therefor is an issue. Namely, there is much to be desired in the art.

According to a first aspect of the present invention there is provided a packet forwarding device which comprises a cache, a forwarding unit, and a control unit. The cache is configured to store forwarding information. The forwarding unit is configured to refer to the forwarding information, to attempt to determine a forwarding destination of a received packet, to send the packet to the control unit regardless of whether or not the forwarding destination of the packet could be determined, and in cases in which the forwarding destination of the packet could not be determined, to request the control unit to determine the forwarding destination of the packet. The control unit is configured to receive a packet from the forwarding unit, and in cases in which the forwarding unit has requested determination of the forwarding destination of the packet, to determine the forwarding destination of the packet, to send the packet to the forwarding destination and store the forwarding destination as forwarding information in the cache, and in other cases, to send the packet to the forwarding destination determined by the forwarding unit.

In the packet forwarding device of a first development of the present invention, the forwarding unit is preferably configured to add to an internal header of the packet a flag indicating whether or not a forwarding destination of the packet could be determined, and the control unit is preferably configured to refer to the flag to judge whether or not the forwarding destination of the packet has to be determined.

A router of a second development of the present invention is preferably provided with the abovementioned packet forwarding device.

According to a second aspect of the present invention there is provided a packet forwarding method which includes: receiving a packet, by a forwarding unit, and referring, by the forwarding unit, to forwarding information stored in a cache to attempt to determine a forwarding destination of the packet. In cases in which the forwarding unit could determine the forwarding destination of the packet, the forwarding unit sends the packet to a control unit, and the control unit sends the packet to the forwarding destination determined by the forwarding unit. In cases in which the forwarding unit could not determine the forwarding destination of the packet, the forwarding unit sends the packet to the control unit and requests the control unit to determine a forwarding destination of the packet, and the control unit determines the forwarding destination of the packet, sends the packet to the forwarding destination, and causes the forwarding destination to store in the cache as forwarding information.

The packet forwarding method of a third development of the present invention preferably includes, adding to by the forwarding unit, an internal header of the packet a flag indicating whether or not a forwarding destination of the packet could be determined, and referring, by the control unit, to the flag to judge whether or not the forwarding destination of the packet has to be determined.

The meritorious effects of the present invention are summarized as follows.
According to the packet forwarding device of the present invention, it is possible to maintain packet sequence before and after packet forwarding. This is because, irrespective of whether or not the forwarding unit could determine the forwarding destination of the packet based on the forwarding information stored in the cache, since the packet is sent to the control unit, all packets included in the same flow are processed sequentially by the forwarding unit and the control unit.

In addition, according to the forwarding device of the present invention, it is possible to perform forwarding of packets at high-speed. This is because the control unit can refer to the flag inserted in a packet by the forwarding unit to judge whether or not the control unit itself is required to determine the forwarding destination of the packet.

### BRIEF DESCRIPTIONS OF THE DRAWINGS

Fig. 1 is a block diagram of a packet forwarding device according to an embodiment of the present invention.
Fig. 2 is a forwarding table stored in a cache.
Fig. 3 is a block diagram of a packet forwarding device according to a first and a second exemplary embodiment of the invention.
Fig. 4 shows a data format of a packet in the second exemplary embodiment of the invention.
Fig. 5 is a flow chart showing operation of the packet forwarding device according to the second exemplary embodiment of the invention.
Fig. 6 is a block diagram for illustrating general operation and a problem of a conventional packet forwarding device.

### PREFERRED MODES OF THE INVENTION

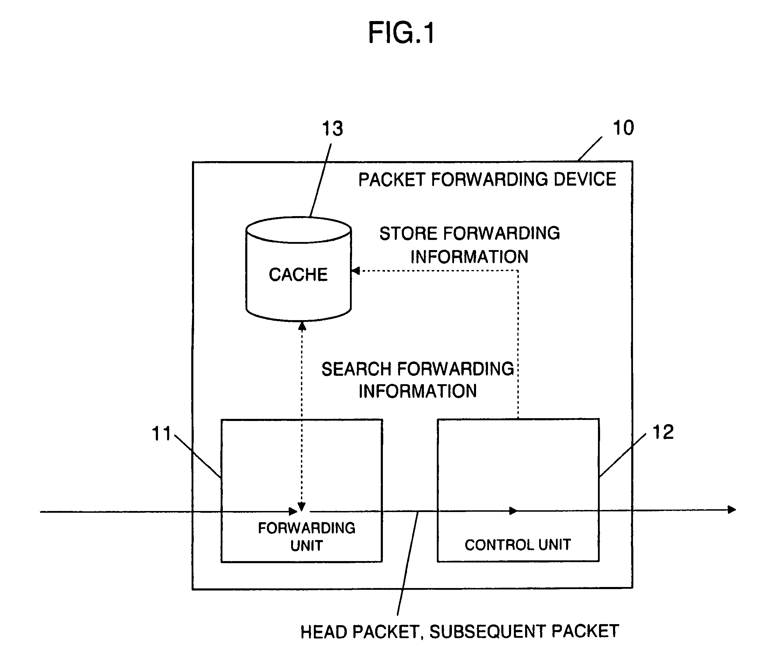

The packet forwarding device according to an exemplary embodiment of the present invention will be described, making reference to the drawings. Fig. 1 is a block diagram showing a configuration of the packet forwarding device of the present embodiment. Referring to Fig. 1, the packet forwarding device 10 is provided with a forwarding unit 11, a control unit 12, and a cache 13.

The cache 13 stores forwarding information. The forwarding unit 11 refers to the forwarding information to attempt to determine a forwarding destination of a received packet, sends the packet to the control unit 12 irrespective of whether or not the forwarding destination of the packet could be determined, and in cases in which the forwarding destination of the packet could not be determined, requests the control unit 12 to determine the forwarding destination of the packet.

The control unit 12 receives the packet from the forwarding unit 11, and in cases in which the control unit 12 has been requested by the forwarding unit 11 to determine the forwarding destination of the packet, determines the forwarding destination of the packet, sends the packet to the forwarding destination and registers the forwarding destination as forwarding information in the cache 13, and in other cases, sends the packet to the forwarding destination determined by the forwarding unit 11.

Furthermore, the forwarding unit 11 preferably adds to an internal header of the packet a flag indicating whether or not the forwarding destination of the packet could be determined, and the control unit 12 preferably refers to the flag to judge whether or not the forwarding destination of the packet has to be determined.

Furthermore, a router is preferably provided with the abovementioned packet forwarding device.

### First Exemplary Embodiment

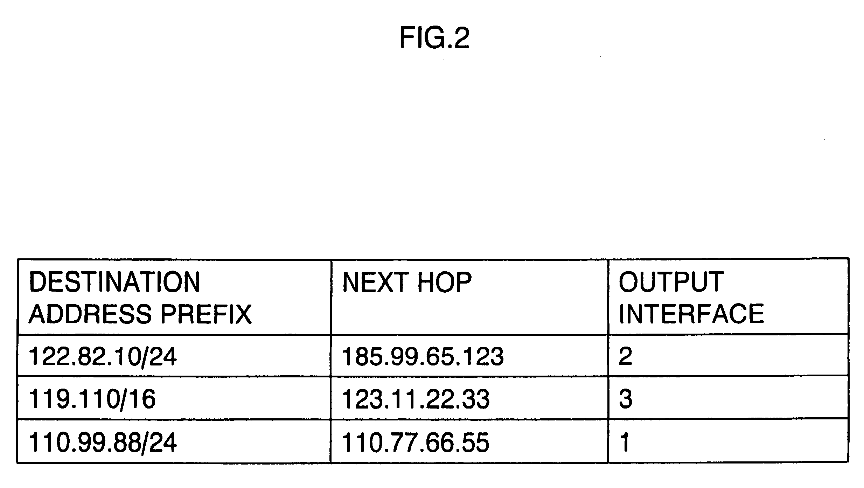

The packet forwarding device according to the first exemplary embodiment of the present invention will be described making reference to the drawings. Fig. 2 shows one example of a layer 3 forwarding table stored in the packet forwarding device provided inside the router. When a packet is forwarded, the packet forwarding device provided inside the router computes a next hop IP address (next hop) based on an IP address of a destination, and determines an output interface to the next hop. Furthermore, the packet forwarding device searches the forwarding table, and sends the packet to the next hop and output interface of a search result.

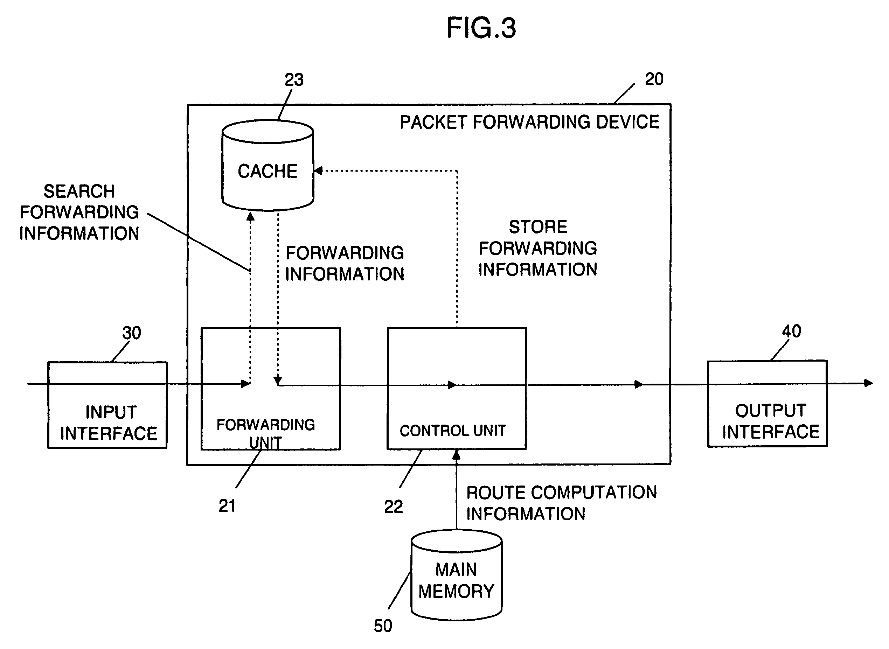

Fig. 3 is a block diagram of the packet forwarding device according to the present exemplary embodiment. The packet forwarding device 20 is provided with a forwarding unit 21, a control unit 22, and a cache 23. The packet forwarding device 20 processes a packet inputted from an input interface 30, based on forwarding information stored temporarily in the cache 23, and outputs to an output interface 40 of a destination.

The forwarding unit 21 refers to the forwarding table stored in the cache 23, for all packets, and judges whether or not forwarding information (next hop and output interface) corresponding to a destination address is included.

In cases in which forwarding information is not included in the cache 23, the forwarding unit 21 requests the control unit 22 to compute the next hop and the output interface of the forwarding destination. The control unit 22 searches the forwarding table stored in a main memory 50, based on an IP address included in a packet header. The control unit 22 sends the packet based on retrieved forwarding information.

In cases in which the forwarding information exists in the cache 23, the forwarding unit 21 can determine the next hop and the output interface of the forwarding destination in a short time, based on the forwarding information. In such cases also, the packet is forwarded from the forwarding unit 21 to the control unit 22, but the control unit 22 sends the packet without computing the forwarding destination of the packet.

In the packet forwarding device 20 according to the present exemplary embodiment as above, packet forwarding is performed based on pipeline processing by the forwarding unit 21 and the control unit 22. That is, since sequential forwarding destinations of packets in the same flow are determined and sent, packet sequence is not reversed.

### Second Exemplary Embodiment

The packet forwarding device according to a second exemplary embodiment of the present invention will be described, making reference to the drawings. Fig. 3 shows a packet forwarding device 20 inside a router. A forwarding unit 21 determines a forwarding destination in a short time, and performs packet forwarding at high speed. A control unit 22 performs a Longest Prefix Match (LPM) of forwarding information stored in a main memory 50, and determines the forwarding destination and forwards a packet. A cache 23 is a high-speed memory, and stores forwarding information that is searched by the control unit 22. The forwarding unit 21 refers to the forwarding information registered in the cache 23.

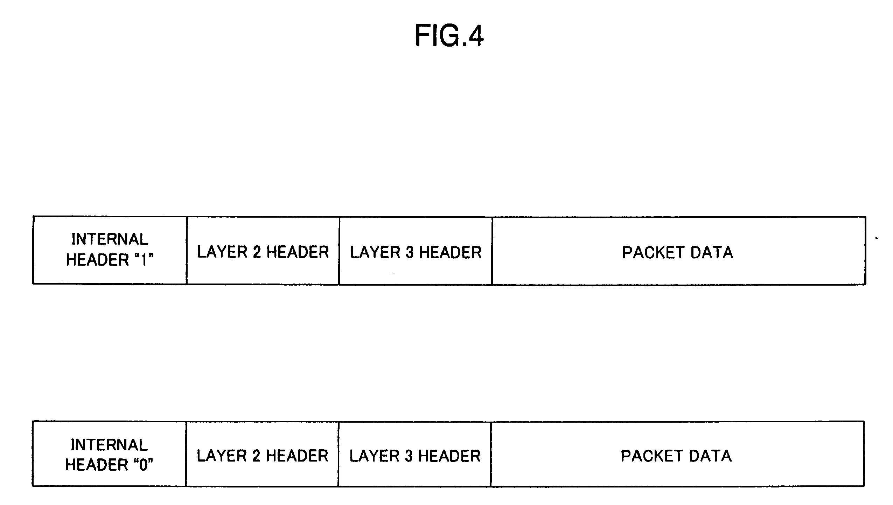

Fig. 4 shows details of an internal header created by the forwarding unit 21. The forwarding unit 21 adds an internal header "1", and forwards to the control unit 22. In cases in which the internal header is "1", the control unit 22 judges that computation of a next hop and an output interface of a destination have been requested by the forwarding unit 21. On the other hand, in cases in which the forwarding unit 21 has added an internal header "0", the control unit 22 judges that computation of the next hop and the output interface of the destination are not necessary. In such cases, the packet merely passes the control unit 22.

When a first packet is inputted, in order to determine the output interface to the next hop, the forwarding unit 21 in the packet forwarding device 20 of the present exemplary embodiment makes reference to a destination IP address of the packet header, and the forwarding table stored in the cache 23. However, since this is the first packet, the forwarding information is not yet stored in the cache 23. Since the forwarding destination of the packet is not determined, the forwarding unit 21 adds "1" to the internal header of the packet, and makes a request to the control unit 22 to compute the next hop and the output interface of the destination.

The control unit 22 refers to an identifier "1" in the internal header and judges that a request has been made for the control unit 22 itself to perform processing. At this time, the control unit 22 computes the forwarding destination of the packet, based on the IP address of the destination included in the packet header, and by determining the next hop and the output interface of the destination, forwards the packet. In addition, the control unit 22 registers the computed next hop and the output interface as forwarding information in the cache 23.

After registration of the forwarding information, in cases in which a subsequent packet included in the same flow is forwarded, the forwarding unit 21 searches the forwarding information registered in the cache 23 and forwards the packet based on the next hop and the output interface, for which the search has found a hit. Furthermore, after registration of the forwarding information, the forwarding unit 21 adds the identifier "0" to the internal header and forwards to the control unit 22. The control unit 22 refers to the identifier "0" in the internal header, judges that computation of the forwarding destination is not necessary, and lets the packet pass.

In this way, in the present exemplary embodiment, since pipeline processing is performed by the forwarding unit 21 and the control unit 22 for each packet included in the flow, it is possible to maintain the packet sequence. Furthermore, since processing of only the head packet that arrived first is performed by the control unit 22, and subsequent packets arriving thereafter are processed at high speed by the forwarding unit 21, it is possible to realize high-speed packet forwarding, while maintaining the packet sequence.

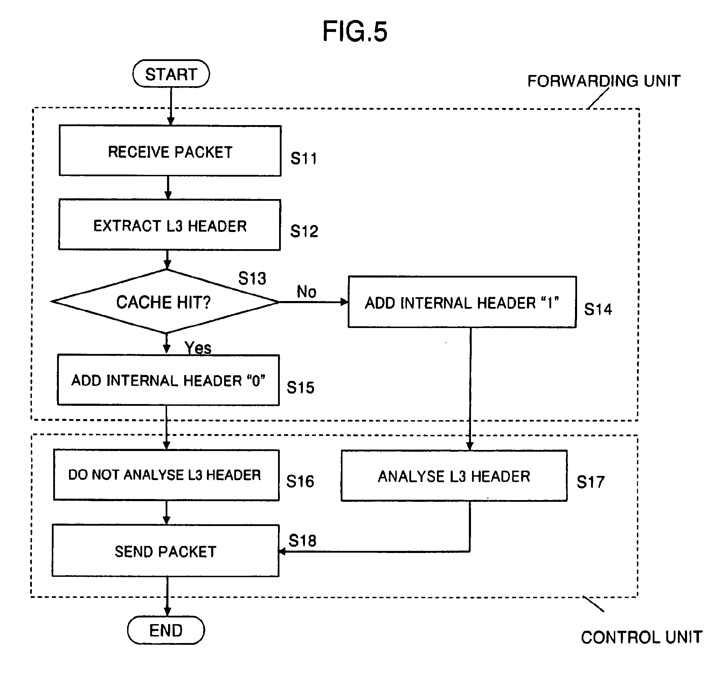

Next, operation of the packet forwarding device of the present exemplary embodiment will be described, making reference to the drawings. Fig. 5 is a flow chart of operation of the packet forwarding device of the present exemplary embodiment.

Referring to Fig. 3 and Fig. 5, the forwarding unit 21 of the packet forwarding device 20 receives packet data from an input interface 30 (step S11). The forwarding unit 21 extracts information of a layer 3 header (or a layer 2 header) of the packet (step S12). The forwarding unit 21 refers to information of a destination IP address included in the layer 3 header (or a destination MAC address included in the layer 2 header) and a forwarding table temporarily stored in the cache 23, and determines the next hop and the output interface of the forwarding destination.

In cases in which information of the forwarding destination of the packet is not registered in the forwarding table of the cache 23, it is judged that no hit was found in the cache 23 (No in step S13). In such cases, the forwarding unit 21 adds "1" to the internal header of the packet (step S14), and requests the control unit 22 to compute the next hop and the output interface. The control unit 22 uses the layer 3 destination IP address information, computes the next hop and the output interface (that is, performs analysis of the L3 header) (step S 17), and forwards the packet to the output interface (step S18). Furthermore, the control unit 22 registers the computed forwarding information in the cache 23.

In cases in which, after the registration, the forwarding unit 21 refers to the forwarding information of cache 23, with respect to a subsequent packet group included in the same flow, a hit is found in the forwarding information registered in the cache 23 (Yes in step S13). Therefore, the forwarding unit 21 is able to determine the next hop and the output interface with respect to the subsequent packet group, based on the forwarding information for which a hit was found. In cases in which the forwarding information registered in the cache 23 can be used, the forwarding unit 21 adds "0" to the internal header of the packet (step S15), and forwards to the control unit 22. The control unit 22 refers to the identifier "0" in the internal header, and without performing computation of the forwarding destination of the packet (that is, without performing an analysis of the L3 header) (step S16), uses the forwarding information through the forwarding unit 21, and sends the packet, based on information of the next hop and the output interface thereof (step S18).

The above description was given based on the exemplary embodiments, but there is no limitation to the above-mentioned exemplary embodiments.
Also it should be noted that any combination of the disclosed and/or claimed elements, matters and/or items may fall under the modifications aforementioned.

## Claims

1. A packet forwarding device (10;20), comprising: a cache (13;23), a forwarding unit (11;21), and a control unit (12;22), wherein
said cache (13;23) is configured to store forwarding information;
said forwarding unit (11;21) is configured to refer to said forwarding information, to attempt to determine a forwarding destination of a received packet, to send said packet to said control unit (12;22) regardless of whether or not the forwarding destination of said packet could be determined, **characterized in that** said forwarding unit is further configured, in cases in which the forwarding destination of said packet could not be determined, to request said control unit (12;22) to determine the forwarding destination of said packet; and
said control unit (12;22) is configured to receive said packet from said forwarding unit (11;21), and in cases in which said forwarding unit (11;21) has requested determination of the forwarding destination of said packet, to determine the forwarding destination of said packet, to send said packet to said forwarding destination and store said forwarding destination as forwarding information in said cache (13;23), and in other cases, to send said packet to the forwarding destination determined by said forwarding unit (11;21).

2. The packet forwarding device (10;20) according to claim 1, wherein
said forwarding unit (11;21) is configured to add to an internal header of said packet a flag indicating whether or not a forwarding destination of said packet could be determined, and
said control unit (12;22) is configured to refer to said flag to judge whether or not the forwarding destination of said packet has to be determined.

3. The packet forwarding device (10;20) according to claim 1 or 2, wherein packet sequence is maintained before and after packet forwarding.

4. A router comprising said packet forwarding device (10;20) according to any one of claims 1 to 3.

5. A packet forwarding method, comprising the steps of :
receiving a packet by a forwarding unit (11;21), and
referring, by said forwarding unit (11;22), to forwarding information stored in a cache (13;23) to attempt to determine a forwarding destination of said packet;
in cases in which said forwarding unit (11;21), could determine the forwarding destination of said packet, sending said packet from said forwarding unit (11;21) to a control unit (12;22), and
sending said packet from said control unit (12;22) to the forwarding destination determined by said forwarding unit (11;21);
in cases in which said forwarding unit (11;21) could not determine the forwarding destination of said packet, sending said packet from said forwarding unit (11;21) to said control unit (12;22) and requesting by said forwarding unit (11;21) said control unit (12;22) to determine the forwarding destination of said packet, and
by said control unit (12;22), determining the forwarding destination of said packet, sending said packet to said forwarding destination, and storing said forwarding destination in said cache (13;23) as forwarding information.

6. The packet forwarding method according to claim 5, comprising
adding, by said forwarding unit (11;21), to an internal header of said packet a flag indicating whether or not a forwarding destination of said packet could be determined; and
referring, by said control unit (12;22), to said flag to judge whether or not the forwarding destination of said packet has to be determined.

7. The packet forwarding method according to claim 5 or 6, wherein packet sequence is maintained before and after packet forwarding.

## Patentansprüche

1. Paketweiterleitungsvorrichtung (10, 20) mit: einem Cache (13, 23), einer Weiterleitungseinheit (11, 21) und einer Steuereinheit (12, 22), wobei
der Cache (13, 23) ausgebildet ist, Weiterleitungsinformation zu speichern,
die Weiterleitungseinheit (11, 21) ausgebildet ist, um auf die Weiterleitungsinformation Bezug zu nehmen, um zu versuchen, ein Weiterleitungsziel eines empfangenen Paketes zu bestimmen, um das Paket an die Steuereinheit (12, 22) zu senden, unabhängig davon, ob das Weiterleitungsziel des Paketes bestimmt werden kann oder nicht, **dadurch gekennzeichnet, dass** die Weiterleitungseinheit ferner ausgebildet ist, um in Fällen, in denen das Weiterleitungsziel des Paketes nicht bestimmt werden kann, die Steuereinheit (12, 22) aufzufordern, das Weiterleitungsziel des Paketes zu bestimmen und
die Steuereinheit (12, 22) ausgebildet ist, das Paket von der Weiterleitungseinheit (11, 21) zu empfangen, und in Fällen, in denen die Weiterleitungseinheit (11, 21) die Bestimmung des Weiterleitungsziels des Paketes angefordert hat, das Weiterleitungsziel des Paketes zu bestimmen, das Paket an das Weiterleitungsziel zu versenden und das Weiterleitungsziel als Weiterleitungsinformation in dem Cache (13, 23) zu speichern, und in anderen Fällen das Paket an das Weiterleitungsziel zu senden, das durch die Weiterleitungseinheit (11, 21) bestimmt wurde.

2. Paketweiterleitungsvorrichtung (10, 20) nach Anspruch 1, wobei
die Weiterleitungseinheit (11, 21) ausgebildet ist, zu einem internen Kopf des Pakets ein Flag zuzufügen, das anzeigt, ob ein Weiterleitungsziel des Paketes bestimmt werden konnte oder nicht, und
die Steuereinheit (12, 22) ausgebildet ist, auf das Flag Bezug zu nehmen, um zu entscheiden, ob das Weiterleitungsziel des Paketes zu bestimmen ist oder nicht.

3. Paketweiterleitungsvorrichtung (10, 20) nach Anspruch 1 oder 2, wobei eine Paketfolge vor und nach der Paketweiterleitung beibehalten wird.

4. Router mit der Paketweiterleitungsvorrichtung (10, 20) nach einem der Ansprüche 1 bis 3.

5. Paketweiterleitungsverfahren mit den Schritten:
Empfangen eines Paketes durch eine Weiterleitungseinheit (11, 21) und
Bezugnehmen durch die Weiterleitungseinheit (11, 22) auf Weiterleitungsinformation, die in einem Cache (13, 23) gespeichert ist, um zu versuchen, ein Weiterleitungsziel des Paketes zu bestimmen,
in Fällen, in denen die Weiterleitungseinheit (11, 21) das Weiterleitungsziel des Paketes bestimmen kann, Senden des Paketes von der Weiterleitungseinheit (11, 21) zu einer Steuereinheit (12, 22), und
Senden des Paketes von der Steuereinheit (12, 22) an das Weiterleitungsziel, das durch die Weiterleitungseinheit (11, 21) bestimmt wurde, und
in Fällen, in denen die Weiterleitungseinheit (11, 21) das Weiterleitungsziel des Paketes nicht bestimmen kann, Senden des Paketes von der Weiterleitungseinheit (11, 21) an die Steuereinheit (12, 22) und Anfordern durch die Weiterleitungseinheit (11, 21), dass die Steuereinheit (12, 22) das Weiterleitungsziel des Paketes bestimmt, und Bestimmen des Weiterleitungsziels des Paketes und Bestimmen des Weiterleitungsziels des Paketes durch die Steuereinheit (12, 22), Senden des Paketes an das Weiterleitungsziel und Speichern des Weiterleitungsziels in dem Cache (13, 23) als Weiterleitungsinformation.

6. Paketweiterleitungsverfahren nach Anspruch 5 mit
Zufügen an einen internen Kopf des Paketes eines Flags durch die Weiterleitungseinheit (11, 21), das anzeigt, ob ein Weiterleitungsziel des Paketes bestimmt werden konnte oder nicht und
Bezugnehmen auf das Flag durch die Steuereinheit (12, 22) um zu entscheiden, ob das Weiterleitungsziel des Paketes zu bestimmten ist oder nicht.

7. Paketweiterleitungsverfahren nach Anspruch 5 oder 6, wobei eine Paketfolge vor und nach dem Weiterleiten des Paketes beibehalten wird.

## Revendications

1. Dispositif d'acheminement de paquet (10 ; 20), comprenant : une mémoire cache (13 ; 23), une unité d'acheminement (11 ; 21) ; et une unité de commande (12 ; 22), dans lequel
ladite mémoire cache (13 ; 23) est configurée pour mémoriser des informations d'acheminement ;
ladite unité d'acheminement (11 ; 21) est configurée pour se référer auxdites informations d'acheminement, pour tenter de déterminer une destination d'acheminement d'un paquet reçu, pour envoyer ledit paquet à ladite unité de commande (12 ; 22) indépendamment du fait que la destination d'acheminement dudit paquet a pu être déterminée ou non, **caractérisé en ce que** ladite unité d'acheminement est en outre configurée, dans les cas où la destination d'acheminement dudit paquet n'a pas pu être déterminée, pour demander à ladite unité de commande (12 ; 22) de déterminer la destination d'acheminement dudit paquet ; et
ladite unité de commande (12 ; 22) est configurée pour recevoir ledit paquet de ladite unité d'acheminement (11 ; 21), et, dans les cas où ladite unité d'acheminement (11 ; 21) a demandé la détermination de la destination d'acheminement dudit paquet, pour déterminer la destination d'acheminement dudit paquet, pour envoyer ledit paquet à ladite destination d'acheminement et mémoriser ladite destination d'acheminement en tant qu'informations d'acheminement dans ladite mémoire cache (13 ; 23), et, dans les autres cas, pour envoyer ledit paquet à la destination d'acheminement déterminée par ladite unité d'acheminement (11 ; 21).

2. Dispositif d'acheminement de paquet (10 ; 20) selon la revendication 1, dans lequel
ladite unité d'acheminement (11 ; 21) est configurée pour ajouter, à un en-tête interne dudit paquet, un indicateur indiquant si, oui ou non, une destination d'acheminement dudit paquet a pu être déterminée, et
ladite unité de commande (12 ; 22) est configurée pour se référer audit indicateur pour juger si, oui ou non, la destination d'acheminement dudit paquet doit être déterminée.

3. Dispositif d'acheminement de paquet (10 ; 20) selon la revendication 1 ou 2, dans lequel une séquence de paquets est maintenue avant et après l'acheminement du paquet.

4. Routeur comprenant ledit dispositif d'acheminement de paquet (10 ; 20) selon l'une quelconque des revendications 1 à 3.

5. Procédé d'acheminement de paquet, comprenant les étapes consistant à :
recevoir un paquet par une unité d'acheminement (11 ; 21), et
se référer, par ladite unité d'acheminement (11 ; 22), aux informations d'acheminement mémorisées dans une mémoire cache (13 ; 23) pour tenter de déterminer une destination d'acheminement dudit paquet ;
dans les cas où ladite unité d'acheminement (11 ; 21) a pu déterminer la destination d'acheminement dudit paquet, envoyer ledit paquet de ladite unité d'acheminement (11 ; 21) à une unité de commande ( 12 ; 22), et
envoyer ledit paquet de ladite unité de commande (12 ; 22) à la destination d'acheminement déterminée par ladite unité d'acheminement (11 ; 21) ;
dans les cas où ladite unité d'acheminement (11 ; 21) n'a pas pu déterminer la destination d'acheminement dudit paquet, envoyer ledit paquet de ladite unité d'acheminement (11 ; 21) à ladite unité de commande (12 ; 22) et demander, par ladite unité d'acheminement (11 ; 21), à ladite unité de commande (12 ; 22) de déterminer la destination d'acheminement dudit paquet, et
par ladite unité de commande (12 ; 22), déterminer la destination d'acheminement dudit paquet, envoyer ledit paquet à ladite destination d'acheminement, et mémoriser ladite destination d'acheminement dans ladite mémoire cache (13 ; 23) en tant qu'informations d'acheminement.

6. Procédé d'acheminement de paquet selon la revendication 5, consistant à :
ajouter, par ladite unité d'acheminement (11 ; 21), à un en-tête interne dudit paquet, un indicateur indiquant si, oui ou non, une destination d'acheminement dudit paquet a pu être déterminée ; et
se référer, par ladite unité de commande (12 ; 22), audit indicateur pour juger si, oui ou non, la destination d'acheminement dudit paquet doit être déterminée.

7. Procédé d'acheminement de paquet selon la revendication 5 ou 6, dans lequel une séquence de paquets est maintenue avant et après l'acheminement du paquet.
